# EUROPÄISCHE PATENTSCHRIFT

(11) **EP 1 016 282 B1**
(45) Veröffentlichungstag und Bekanntmachung des Hinweises auf die Patenterteilung: **10.10.2001**
(21) Anmeldenummer: 98941340.6
(22) Anmeldetag: 16.07.1998
(51) Int. Cl.: H04N 7/16

(54) **DECODER-EINRICHTUNG FÜR DIE ENTSCHLÜSSELUNG VON VERSCHLÜSSELTEN FERNSEH-PROGRAMMEN**
TRANSCODER FOR DECODING ENCODED TV PROGRAMS
INSTALLATION DE DECODAGE POUR LE DECODAGE DE PROGRAMMES TELEVISUELS CODES

(30) Priorität: 06.08.1997 DE 19734071
(43) Veröffentlichungstag der Anmeldung: 05.07.2000
(73) Patentinhaber: Deutsche Telekom AG, 53113 Bonn (DE)
(72) Erfinder: WILHELM, Siegfried, D-81373 München (DE); KOWALSKI, Bernd, D-57072 Siegen (DE)
(86) Internationale Anmeldenummer: EP9804424
(87) Internationale Veröffentlichungsnummer: WO9908446

(56) Entgegenhaltungen:
- WO-A-96/32702
- WO-A-97/20431
- DE-U- 9 417 937
- GB-A- 2 304 217
- BUER M ET AL: "INTEGRATED SECURITY FOR DIGITAL VIDEO BROADCAST" IEEE TRANSACTIONS ON CONSUMER ELECTRONICS, Bd. 42, Nr. 3, August 1996, Seiten 500-503, XP000638531

## Beschreibung

Die Erfindung betrifft eine Decoder-Einrichtung für die Entschlüsselung von verschlüsselten Fernreh-Programmen. Insbesondere betrifft die Erfindung eine Decoder-Einrichtung mit einer Bedienungseinheit, für die Entschlüsselung von verschlüsselten Fernseh-Programmen, mit einem Eingang zum Einspeisen eines verschlüsselten Bernseh-Progremmes, einer Entschlüsselungseinrichtung, die ein verschlüsseltes Fernseh-Programm in ein mittels eines Fernseh-Empfängers wiedergebbares Format entschlüsselt, einem Ausgang, der mit einem Fernseh-Empfänger verbindbar ist, um das entschlüsselte Fernseh-Programm in den Fernseh-Empfänger zur Wiedergabe einzuspeisen, einer Schnittstelle für ein Identifikations- und/oder Schlüsselträgerbauteil zur Freigabe des Entschlüsselungseinrichtung, und einer Schnittstelle für eine Bedienungseinheit der Decoder-Einrichtung. Ein Beispiel einer solchen Decoder-Einrichtung ist in WO-A-9 720 431 offenbart.

Mit einer derartigen Decoder-Einrichtung ist der Empfang und die Entschlüsselung von sog. Pay-TV Programmen möglich, wobei derzeitige Decoder-Einrichtungen als sog. Sei-Top-Boxen zu herkömmlichen Fernseh-Empfängern im Handel erhältlich sind.

Die bisher üblichen, zum Beispiel monatlichen Abrechnungen, für die Bereitstellung des Programms bei Pay-TV weichen mehr und mehr einer individuellen ("pay-pec-view") Abrechnungs-Praxis. Daher besteht die Notwendigkeit einer Identifizierung und Authentifizierung des Programm-Kunden vor dem Zugriff des Programm-Kunden auf das Programm. Außerdem werden bei sog. HOT-Programmen (Home Order Television) auch Bestellungen des Programm-Kunden gegen dessen Bankkonto oder seine Guthaben auf einer Chip-Karte verrechnet. Auch hierbei sind Identifizierung und Authentifizierung des Programm-Kunden sowie ggf. Sicherungs-Mechanismen gegen Mißbrauch erforderlich.

Zur Sicherung elektronischer Abrechnungsverfahren sowie zum Schutz vertraulicher Informationen (Bankverbindungsdaten, Konto-Stand etc.) werden Chipkarten eingesetzt, die Microprozessoren haben, die mit Verschlüsselungsalorithmen ausgestattet sind. Ein derartiger Verschlüsselungsalorithmus ist der sog. RSA-Algorithmus. Beim Pay-TV ist eine derartige Chipkarte Teil des sog. "Conditional Access System" (CAS), mit der geprüft wird, ob der Anfragende tatsächlich der authorisierte Programm-Kunde ist, und ggf. ob seine Bonität für die gewünschte Leistung ausreicht. Auch bei sog. "Electronic Commerce" repräsentiert diese Chipkarte die Identität des Kunden bzw. seine elektronische Geldbörse. Dabei kann auf der Chipkarte ein Guthaben vermerkt sein, das aufgefüllt werden kann. Zugriffe auf die Chipkarte durch Dritte (Programm-Provider, Handel oder dergl. Erfolgen in der Regel durch mehr oder weniger automatisierten telefonischen oder Internet-Kontakt mit der Set-Top-Box vor oder bei der Transaktion.

Ein wachsendes Problem in diesem Zusammenhang ist die steigende Anzahl von Anbietern von Programmen oder Leistungen, die ein Programm-Kunde über diese Medien beziehen kann. Damit wird auch der Geräte-Aufwand (Set-Top-Box, Fernseh-Gerät, Internet-Endgerät (PC oder Net-PC), Fernbedienungsgeräte für die Set-Top-Box und das Fernseh-Gerät, sowie die Anzahl der für die Inanspruchnahme der einzelnen Dienste oder Leistungen notwendigen Chip-Karten immer größer.

Der vorliegenden Erfindung liegt daher die Aufgabe zugrunde, diese unterschiedlichen Komponenten preiswerter zu gestalten, das heißt ihren Hardware-Aufwand zu verringern, und diese unterschiedlichen Komponenten in der Handhabung für den Programm-Kunden einfacher und fehlerunanfälliger zu gestalten. Außerdem soll die Erfindung dem in steigendem Maß relevanten Problem der Sicherheit im Zusammenhang mit der Leistungs-Inanspruchnahme durch unbefugte Dritte Rechnung tragen.

Erfindungsgemäß wird diese Aufgabe durch die Merkmale des kennzeichnenden Teils des Anspruchs 1 gelöst.

Durch diese Ausgestaltung können Schnittstellen eingespart werden. Außerdem ist der Programm-Kunde (Benutzer) auf bequemere Weise in der Lage, seine Transaktionen auszuführen, da die Bedienungseinheit der Decoder-Einrichtung ohnehin mit einem Tastenfeld ausgestattet ist. Weiterhin erhöht sich die Sicherheit, da der Programm-Kunde (auch in größerem Kreis von Dritten seine Eingaben (PIN, TAN, etc.) tätigen kann, ohne daß dies von Dritten beobachtet werden kann. Außerdem kann die Bedienungseinheit der Decoder-Einrichtung zusammen mit dem Identifikations- und/oder Schlüsselträgerbauteil (= Chipkarte) sicher verwahrt werden, während in der Regel aus Bequemlichkeit eine Chipkarte nicht aus der Decoder-Einrichtung (= Set-Top-Box) entnommen wird.

Gemäß einer bevorzugten Ausführungsform der erfindungsgemäßen Decoder-Einrichtung mit einer Bedienungseinheit ist die Bedienungseinheit auch zur Bedienung des Fernseh-Empfänger-Gerätes eingerichtet, der eine Schnittstelle zum Empfang von Steuerbefehlen von der Bedienungseinheit aufweist. Dies reduziert den Geräte-Aufwand weiter. Außerdem kann damit auch der Zugriff auf das Fernseh-Empfänger-Gerät insgesamt kontrolliert werden. Das heißt, daß auch die Benutzung des Fernsehers für nicht Zahlungspflichtige Programme nur bei Freigabe durch den authorisierten Benutzer möglich ist. Dies kann dadurch erreicht werden, daß die Funktion der Bedienungseinheit als Ganzes von der Eingabe der Kennung (PIN) des authorisierten Benutzer abhängt.

Unabhängig davon ist es vorteilhaft, wenn auch die Schnittstelle zu dem Identifikations- und/oder Schlüsselträgerbauteil für die Authorisierung der Verbindung über das Telekommunikationsnetz in der Bedienungseinheit angeordnet ist.

Wie bereits erwähnt kennen das Identifikations- und/oder Schlüsselträgerbauteil für die Authorisierung der Verbindung über das Telekommunikationsnetz und das Identifikations- und/oder Schlüsselträgerbauteil zur Freigabe des Entschlüsselungseinrichtung entweder durch zwei getrennte oder durch eine gemeinsame Chip-Karte realisiert sein.

In einer weiteren Ausgestaltung weist die Decoder-Einrichtung eine Schnittsteils auf, über die die Decoder-Einrichtung mit einem Rechner verbindbar ist, der zur Steuerung der Decoder-Einrichtung und/oder zur Herstellung einer Verbindung mit einem anderen Teilnehmer über das Telekommunikationsnetz eingerichtet ist. Damit ist es möglich, die gesamten Funktionalität eines Rechners (PC oder Internet-PC), also die Speicherung und Verarbeitung von Daten und Informationen, sowie die komfortablere Gestaltung von Dialogen des Programm-Kunden mit zum Beispiel dem Programm-Anbieter oder dem Dienste-Anbieter für den Programm-Kunden verfügbar zu machen.

In einer besonders bevorzugten Ausführungsform der Erfindung ist die Bedienungseinheit durch den Rechner gebildet ist, der eine Schnittstelle aufweist, um die Decoder-Einrichtung zu steuern, und eine Schnittstelle für das Identifikations- und/oder Schlüsselträgerbauteil für die Authorisierung der Verbindung über das Telekommunikationsnetz bzw. das Identifikations- und/oder Schlüsselträgerbauteil zur Freigabe des Entschlüsselungseinrichtung aufweist. Damit wird die Bereitstellung einer bzw. zwei separaten Bedienungseinheiten überflüssig. Es versteht sich, daß auch bei dieser Ausführungsform die beiden Chip-Karten für den Verkehr mit dem Programm-Anbieter und dem Dienste-Anbieter auch als eine gemeinsame Chip-Karte realisiert sein können.

Im übrigen kann die Verbindung zwischen dem Rechner und dem Fernseh-Gerät bzw. dem Rechner und der Decoder-Einrichtung sowohl drahtlos (zum Beispiel als Infrarot- oder als Ultraschallverbindung), als auch drahtgebunden sein kann. Außerdem kann der Rechner wegen seiner speziellen Anforderungen (relativ geringer Speicherbedarf, geringe Anforderungen an den Tastaturkomfort wegen der üblicherweise nur kurzen Eingaben etc.) auch als sog. Palmtop-Rechner ausgestaltet sein, der mit entsprechenden Schnittstellen (Infrarot-Schnittstelle zu der Decodier-Einrichtung so einer oder mehreren Schnittstellen für die Chip-Karte(n). Damit hat der Benutzer eine sehr kompakte und komfortable Steuerungs- und Bedienmöglichkeit seiner Geräte, aber auch die einfache Möglichkeit, mit dem Programm-Anbieter und/oder dem Dienste/Waren-Anbieter auf komfortable Weise zu kommunizieren. Schließlich verringert sich auch der Verkabelungsaufwand zwischen den einzelnen Komponenten auf der Benutzerseite erheblich, was ebenfalls den Komfort erhöht.

Gemäß einer besonders bevorzugten Ausführungsform der Erfindung ist die Decoder-Einrichtung in das Fernsehgerät integriert. Damit wird dem Benutzer ein geschlossenes und gegen Mißbrauch besonders geschütztes Gerät zur Verfügung gestellt, bei dem alle Funktionen (herkömmliches Fernsehen, Pay-TV, Kommunikation mit einem Dienste/Waren-Anbieter über das Telekommunikationsnetz, Speicherung und/oder Nachbearbeitung der empfangenen Daten in dem Rechner etc.) in einer gegen Mißbrauch geschützten Weise ausführbar sind.

Die Erfindung betrifft auch eine Chip-Karte für eine vorstehend beschriebene Decoder-Einrichtung mit einer Bedienungseinheit, mit einer Rechnereinheit, einem ersten Speicherbereich, in dem zumindest Teile von Betriebssystem-Funktionen abgelegt sind, mit denen die Kommunikation zwischen der Rechnereinheit der Chip-Karte und den Peripherie-Geräten der Chip-Karte, sowie die Kommunikation mit: einem externen Host-Rechner gesteuert wird, und mit denen geschützte, ungeschützte, und/oder Schreib/Lese-Speicher-Bereiche der Chip-Karte verwaltet werden, und einem zweiten Speicherbereich, der in geschützte und ungeschützte Bereiche unterteilt ist, wobei der Zugriff auf geschützte Bereiche in Abhängigkeit von einem Ergebnis einer Überprüfung der Zulässigkeit des Zugriffs erfolgt, wobei in den geschützten Bereich des zweiten Speicherbereiches ein Generalschlüssel abgelegt ist, unter dessen Kontrolle die Eintragung wenigstens eines weiteren einfachen Schlüssels sowie eines zu diesem weiteren einfachen Schlüssel gehörendes Protokoll-Programm durch den externen Host-Rechner erfolgt.

Mit dieser Chip-Karte kann die vorstehend beschriebene Decoder-Einrichtung besonders sicher betrieben und auch einfach um den Zugriff auf mehrere weitere Dienste-Anbieter erweitert werden.

Vorzugsweise ist in dem zweiten Speicherbereich eine Schlüssel-Verwaltung abgelegt, von der aus der Zugriff auf ein Protokoll-Programm eines einfachen Schlüssels erfolgt.

Zur Ergänzung zusätzlicher Schlüssel bzw. Zugriffsmäglichkeiten auf weitere Anbieter dient dabei folgendes erfindungsgemäße Verfahren:
- Herstellen einer Telekommunikationsverbindung zwischen dem Host-Rechner und der Decoder-Einrichtung mit der Bedienungseinheit oder dem die Bedienungseinheit enthaltenden Rechner durch den Host-Rechner,
- Überprüfen des Generalschlüssels in der Chip-Karte durch den Host-Rechner,
- Übermitteln eines einfachen Schlüssels sowie eines zu diesem Schlüssel gehörenden Protokoll-Programmes an die Chip-Karte in verschlüsselter Form, falls die Überprüfung positiv ausfällt,
- Eintragen des einfachen Schlüssels sowie des zu diesem Schlüssel gehörenden Protokoll-Programmes in den geschützten Speicherbereich der Chip-Karte,
- Sperren des geschützten Speicherbereiches der Chip-Karte.

Dabei kann vor dem Eintragen des einfachen Schlüssels sowie des zu diesem Schlüssel gehörenden Protokoll-Programmes in den geschützten Speicherbereich der Chip-Karte der Schlüssel und das Protokoll-Programm durch die Rechnereinheit der Chipkarte entschlüsselt werden.

Fig. 1 zeigt eine Anordnung gemäß dem Stand der Technik in einem schematischen Blockdiagramm.

Fig. 2 - 4 zeigen unterschiedliche Ausführungsformen der vorliegenden Erfindung, jeweils in einem schematischen Blockdiagramm.

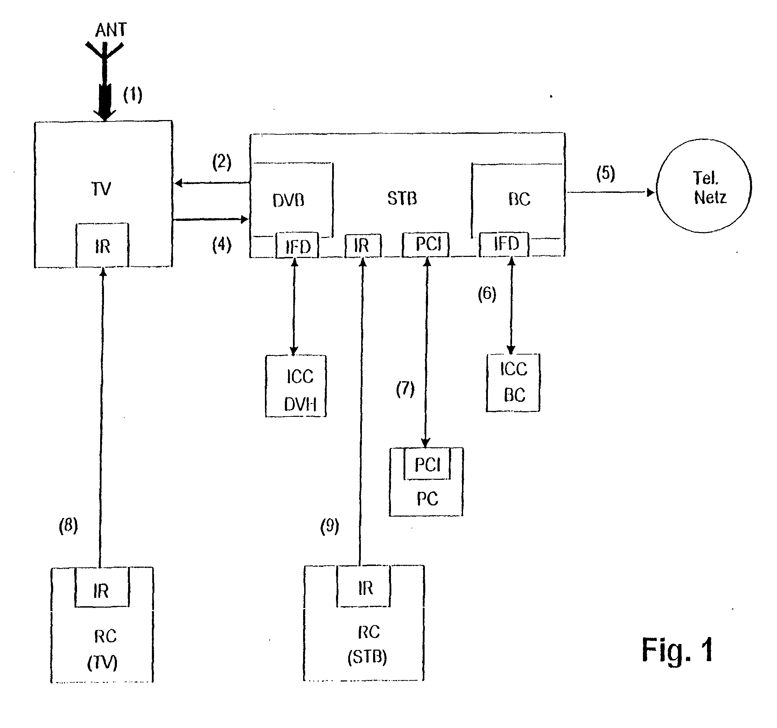

Fig. 1 zeigt eine derzeit übliche Endgeräteumgebung für kombinierte Pay TV- und Electronic-Commerce Anwendungen.

Über die Leitung (1) wird das breitbandige digital verschlüsselte Pay TV Nutzsignal durch das Fernseh-Gerät empfangen und über den Ausgang (4) an den Eingang (IN) in die Set-Tcp-Box (STB) übergeben. Dort wird das Signal von einem speziellen Chip mit einem hierfür vorgesehenen Algorithmus - der DVB-Algorithmus sei hier stellvertretend für alle genannt - entschlüsselt und an das Fernseh-Gerät zurückgegeben. Die Einstellung der Schlüssel erfolgt mittels einer Chipkarte (ICC DVB) über die Schnittstelle (3). Die Chip-karte enthält den Schlüsselverteilalgorithmus des Conditional Access Systems (z. B. RSA) und den geheimen Schlüssel des Kunden. Nur ein Kunde mit gültiger Chipkarte (ICC DVR) kann Pay TV Sendungen entschlüsseln. Die Chipkarte (ICC DVR) ist über die Chipkarten-Schnittstelle "IFD" an die Set-Top-Box (STB) angeschlossen.

Erweiterungen der Set-Top-Box (STB) sehen vor, daß ein Rückkanal über das Telefonnetz bzw. Internet über die Schnittstelle (5) mit den Servern verschiedener Dienstleistungsanbieter verbunden werden kann, um z.B. Dienstleistungen oder Artikel zu bestellen, die als Angebot in der Werbung der Pay TV Kanäle enthalten sind. Zur Sicherung von Bestellung und Bezahlung kann hier eine zweite Chipkarte (ICC BC) über eine weitere Schnittstelle (IFD) eingesteckt werden, so daß die Verbindung (6) zwischen der zweiten Chipkarte (ICC BC) und der weiteren Schnittstelle (IFD) hergestellt ist.

Weitere Anschlußmöglichkeiten der Set-Top-Box (STB) sehen die Verwendung einer IR-Fernbedienung (9) und eines Rechners PC über eine im PC-Umfeld übliche Schnittstelle (7), hier vereinfachend "PCI" genannt (z.B. V24/RS232C oder parallele Schnittstelle), vor. Mit dem Rechner PC lassen sich z.B. Rückkanalgeschäfte komfortabel gestalten oder Informatianen aus den Pay TV Kanälen nachverarbeiten.

Zum Anschluß zweier Chipkarten an die Set-Top-Box (STB) gibt es verschiedene Lösungen. Entweder werden die Chipkartenterminals (IFD) fest in die Set-Top-Box (STB) eingebaut oder sie werden steckbar als PCMCIA-Module ausgeführt. Mit Hilfe der PCMCIA Module entsteht die Möglichkeit, verschiedene Pay TV Zugangsverfahren (CAS) ohne Eingriffe in die Set-Top-Box (STB) gegeneinander auszuwechseln.

Nachteile der herkömmlichen Endgeräte-Konfiguration sind die geringe Bedienungsfreundlichkeit, die umständliche Verkabelung der Set-Top-Box (STB) und deren aufwendige Schnittstellengestaltung.

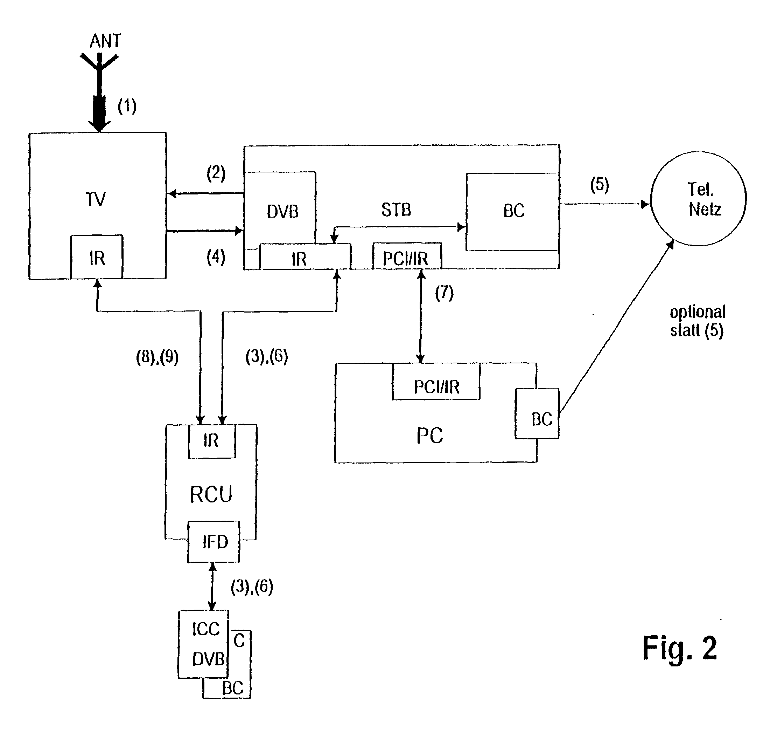

Die Fig. 2, 3 und 4 illustrieren Ausführungsformen der Erfindung.

Bereits in einer ersten Integrationsstufe nach Fig. 2 werden die Fernbedienungen von Set-Top-Box (STB) und Fernseh-Gerät ('I'V Set) in einem Gerät, der Bedienungseinheit (RCU) zusammengefaßt. Die neue Bedienungseinheit (RCU) erhält eine Chipkartenschnittstelle, die sowohl die Chipkarte (ICC DVB) des Pay TV Systems als auch die Chipkarte (ICC BC) des Rückkanals ansteuern kann. Der Schlüsselaustausch des Conditional Access Systems CAS des PAY TV geschieht zwar vom Ablauf her genauso wie in der herkömmlichen Konfiguration.

In Fig. 2 ist die Chip-Karte (ICC) DVB jedoch über die Bedienungseinheit (RCU) durch eine IR-Schnittstelle mit dem Pay TV Entschlüsselungschip (z. B. DVB) in der Set-Top-Box (STB) verbunden. Das Gleiche gilt für die Chip-Karte (ICC) BC, welche die Sicherung des Rückkanals nunmehr ebenfalls über die Bedienungseinheit (RCU) und deren IR-Schnittstelle vornimmt.

Damit entfällt das Einstecken der Chipkarten in die Set-Top-Box (STB) und somit auch alle Chipkartenschnittstellen an der Sat-Top-Box (STB). Der Kunde steckt seine Karten direkt in die Fernbedienung RCU. Falls Pay-TV-Anbieter und Rückkanal-Dienstleister entsprechende vertragliche Vereinbarungen treffen, können die Funktionen beider Chipkarten ICC DVB und ICC BC sogar auf einer einzigen Chip-Karte (ICC) zusammengefaßt werden.

Der Rechner PC wird in Fig. 2ff entweder weiterhin über eine herkömmliche Schnittstelle (PCI) mit der Set-Top-Box (STB) verbunden oder nutzt hierzu ebenfalls die IR-Schnittstelle (Infra-Rot-Schnittstelle) der Set-Top-Box (STB).

Die Rückkanalanbindung an das Telekommunikationsnetz erfolgt entweder über die Set-Top-Box (STB) oder über den Rechner (PC). Grundsätzlich sind beide Varianten möglich.

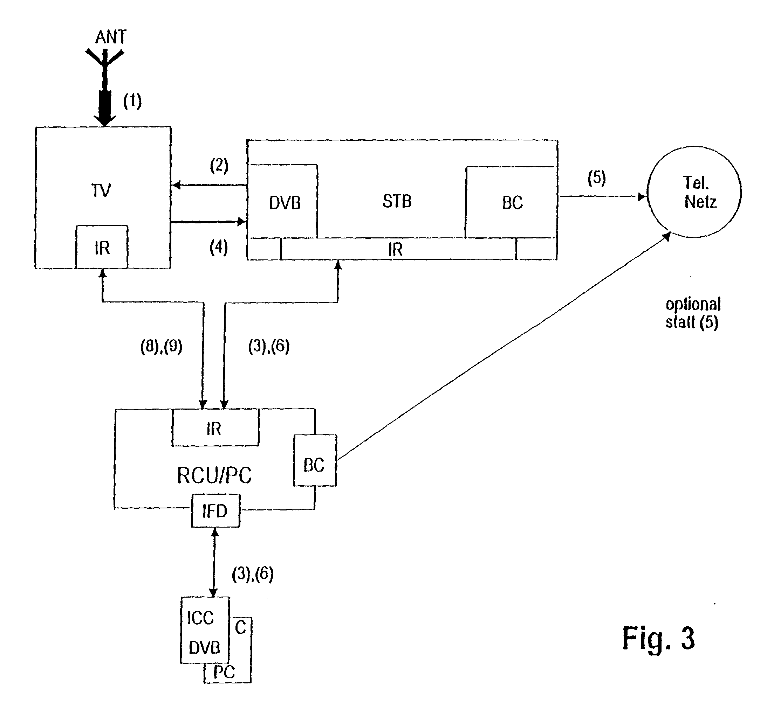

Fig. 3 zeigt die Kombination von Fernbedienung (RCU) und dem Rechner (PC) in einer weiteren Integrationsstufe. Hierbei lassen sich die Vorteile des Rechners PC und der Fernbedienung (RCU) gleichzeitig nutzen. Diese Lösung wird insbesondere interessant, wenn es sich bei dem kombinierten Gerät RCU/PC um ein "Netzwerk-PC"-ähnliches Gerät handelt, welches kompakt und ohne aufwendige Peripherie und Verkabelung z.B. vom Wohnzimmertisch aus bedient werden kann.

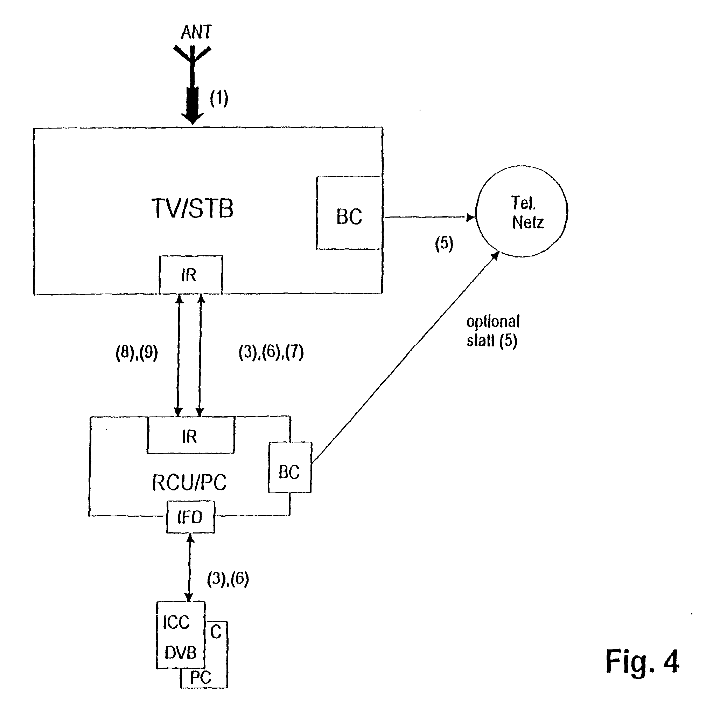

In Fig. 4 ist die Vereinigung von Fernseh-Gerät (TV Set) und Set-Top-Box (STB) in nur einem Endgerät als eine weitere Integrationsstufe dargestellt.

Die in den Fig. 2 bis 4 dargestellten neuen Endgeräte-Konfigurationen zeigen, wie sich die Bedienung und die Verkabelung der Endgeräte nennenswert vereinfachen läßt ohne die Funktionalität zu beeinträchtigen.

Erfindungsgemäß werden also anstelle einer oder mehrerer Chipkartenschnittstellen an der Set-Top-Box (STB) nunmehr die betreffenden Chipkarten über eine Fernbedienung RCU und deren Infrarot-Schnittstellen mit dem in der Set-Top-Box (STB) verbleibenden Pay TV Entschlüsselungschip verbunden. Damit können aufwendige und anfällige Schnittstellen an der Set-Top-Box (STB) entfallen.

Außerdem können die Funktionen der Pay TV Chipkarte und der Rückkanal Chipkarte unter Zuhilfenahme einer speziellen Fernbedienung RCU auf nur einer Karte bedienungsfreundlich kombiniert werden.

Schließlich ist durch die Kombination von Fernbedienung und PC in nur einem Gerät RCU/PC eine Verlagerung der Rückkanalanbindung aus der Set-Top-Box (STB) heraus ermöglicht. Damit ist eine optimale Nutzung des Internet PC (= PC, der über beliebige Online-Netze mit Servern von beliebigen Diensteanbietern verbunden ist), in Verbindung mit Pay TV Diensten einschließlich ihrer Rückkanaloptionen ermöglicht.

Ein weiterer Gesichtspunkt der Erfindung ist die Ausgestaltung der Chip-Karte, damit diese auch in der Lage ist, mit hohem Sicherheits-Niveau sowohl die Programm-Entschlüsselung des Programms des Pay-TV-Anbieters, als auch die Transaktion (Bestellung und Kaufpreis-Entrichtung) bei dem Waren/Dienstleistungs-Anbieter abzuwickeln.

Insbesondere, wenn im Laufe der Zeit weitere Waren/Dienstleistungs-Anbieter dazukommen, hätte dies zur Folge, daß der Programm-Kunde jeweils eine neue Chip-Karte benötigt, die die Schlüssel und Protokolle der bisherigen Anbieter (sowohl Pay-TV-Anbieter, als auch Waren/Dienstleistungs-Anbieter) enthält, als auch den Schlüssel und das Protokoll des neu dazugekommenen.

Hierfür bietet die Erfindung ebenfalls eine Lösung:
Da der Waren/Dienstleistungs-Anbieter ohnehin in der Regel durch den gleichen Host-Rechner mit dem Benutzer in Verbindung tritt wie der Pay-TV-Anbieter, kann dieser Host auch über einen Generalschlüssel auf die gesperrten Bereiche der Chip-Karte des Kunden zugreifen, um dort einen weiteren Schlüssel und das zugehörige Protokoll für zukünftige Transaktionen (Entschlüsselungs- oder Zahlungsvorgänge) abzulegen.

Außerdem ist in einem weiteren (ggf. ebenfalls gesperrten) Bereich eine Vektorentabelle oder eine Abfrage-Routine zu führen, in der nacheinander die neu dazukommenden Schlüssel verwaltet werden. Beim Zugriff auf die Chipkarte wird zunächst anhand der Vektorentabelle oder der Abfrage-Routine geprüft, ob ein passender Schlüssel vorhanden ist, bzw. ob der durch den Benutzer eingegebene Schlüssel mit einem der auf der Chip-Karte abgelegten Schlüssel zusammenpaßt. Erst wenn das Ergebnis dieser Abfrage positiv ist, wird das zu dem jeweiligen Schlüssel gehörige Programm zur Transaktion bzw. Entschlüsselung (ggf. entschlüsselt und dann) ausgeführt.

Vorzugsweise wird der Schlüssel und das zugehörige Protokoll(-Programm) in ebenfalls verschlüsselter Form von dem Host-Rechner an die Set-Top-Box (STB) übertragen, und von dort über die Schnittstelle an die Bedienungseinheit (RCU) weitergegeben. Falls die Bedienungseinheit (RCU) in den Rechner (PC/RCU) integriert ist, kann der Host-Rechner Rechner direkt über das Telekommunikationsnetz mit dem Rechner (PC/RCU) in Verbindung treten, um die Informationenen für die bzw. in die Chip-Karte (ICC) zu übertragen.

Je nach konkreter Ausgestaltung kann das Protokoll(-Programm) in der Chip-Karts nur in verschlüsselter Form abgelegt sein, und jeweils zur Laufzeit vor der Ausführung entschlüsselt werden. Alternativ dazu kann das Protokoll(-Programm) jedoch auch beim Ablegen in dem (geschützten) Speicherbereich der Chipkarte in eine lauffähige Form gebracht werden.

Damit enthält der Speicher der Chip-Karte (neben anderem) folgende Programme bzw. Daten:

Einen Betriebssystem-Kern, mit dem die Kommunikation zwischen dem Prozessor der Chip-Karte und den Peripherie-Geräten auf der Chip-Karte, sowie die Kommunikation mit dem Host-Rechner gesteuert wird, der die Speicherbereiche der Chip-Karte (geschützte und ungeschützte Bereiche, Schreib/Lese-Bereiche, Flash-EEPROM etc.) verwaltet usw. Schlüssel (ein Haupt- oder General-Schlüssel, sowie ein oder mehrere Anwendungs-Schlüssel), wobei der Haupt-Schlüssel dazu dient, (weitere) Anwendungs-Schlüssel und die zugehörigen Anwendungs- oder Protokoll-Programme in den Speicher-Bereich zu transferrieren. Die Anwendungs-Schlüssel dienen dazu sicherzustellen, daß die Ausführung der Protokoll-Programme (und damit der Abwicklung von Bestellungen oder die Entschlüsslung von Pay-TV-Programmen) nur bei Vorliegen der richtigen Eingabe durch den Benutzer erfolgt.

Verschlüsselte Anwender-Programme oder Protokoll-Prcgramme, mit denen die Abwicklung von Bestellungen oder die Entschlüsselung von Pay-TV-Programmen gesteuert wird.

Zur weiteren Erhöhung der Sicherheit ist es vorgesehen, die Identifizierung und Authentifizierung zwischen der Bedienungseinheit (RCU) und/oder der Set-Top-Box (STB) bzw. Fernseh-Gerät (TV Set) einerseites und dem Host-Rechner andererseits auf unterschiedlichen Wegen bzw. Kanälen durchzuführen. Mit anderen Worten werden ein Teil des Protokollverkehrs über die Schnittstelle (5) zum Telefon-Netz und ein weiterer Teil über die Leitung (1) mit oder vor dem breitbandigen digital verschlüsselten Pay TV Nutzsignal übertragen. Dabei kann auch die Freischaltung/Sperrung von Diensten auf diesen Wegen erfolgen. Da für einen Mißbrauch dann beide Kanäle synchron abzuhören und zu entschlüsseln wären, ist so die Sicherheit erheblich höher. Insbesondere ist es möglich, die Informationen mit der Freischaltung/ Sperrung oder neue Schlüssel etc. auf die beiden Kanäle so zu verteilen, daß sie nur wechselweise und auch nur stufenweise in jeweiliger Kenntnis entschlüsselt werden können.

## Patentansprüche

1. Decoder-Einrichtung (STB) mit einer Bedienungseinheit (RCU), für die Entschlüsselung von verschlüsselten Fernseh-Programmen, mit
- einem Eingang (4) zum Einspeisen eines verschlüsselten Fernseh-Programmes,
- einer Entschlüsselungseinrichtung (DVB), die ein verschlüsseltes Fernseh-Programm in ein mittels eines Fernsehgeräts (TV) wiedergebbares Format entschlüsselt,
- einem Ausgang (2), der mit einem Fernsehgerät (TV) verbindbar ist, um das entschlüsselte Fernseh-Programm in das Fernsehgerät (TV) zur Wiedergabe einzuspeisen,
- einer Schnittstelle (IFD 3,6) für ein Identifikations- und/oder Schlüsselträgerbauteil (ICC DVB) zur Freigabe der EntSchlüsselungseinrichtung (DVB),
- einer Schnittstelle (IR 3,6) für eine Bedienungseinheit (RCU) der Decoder-Einrichtung (STB), und
- einer Schnittstelle (BC 5) zu einem Telekommunikationsnetz (Tel. Netz),
**dadurch gekennzeichnet, daß**
- die Schnittstelle (IFD 3,6) für das Identifikations- und/oder Schlüsselträgerbauteil (ICC DVB) in der Bedienungseinheit (RCU) der Decoder-Einrichtung (STB) angeordnet ist, und
- eine Schnittstelle (IFD 3,6) zu einem Identifikations- und/oder Schlüsselträgerbauteil (ICC BC) vorhanden ist, wobei die Herstellung einer Verbindung über das Telekommunikationsnetz (Tel. Netz) mit einem bestimmten Teilnehmer abhängig von einer Autorisierung durch das Identifikations- und/oder Schlüsselträgerbauteil (ICC BC) erfolgt.

2. Decoder-Einrichtung mit einer Bedienungseinheit (RCU) nach Anspruch 1, **dadurch gekennzeichnet, daß**
- die Schnittstelle (IFD 3,6) zu dem Identifikations- und/oder Schlüsselträgerbauteil (ICC BC) für die Autorisierung der Verbindung über das Telekommunikationsnetz (Tel. Netz) in der Bedienungseinheit (RCU) angeordnet ist.

3. Decoder-Einrichtung (STB) mit einer Bedienungseinheit (RCU) nach Anspruch 1 oder 2, **dadurch gekennzeichnet, daß**
- die Bedienungseinheit (RCU) auch zur Bedienung des Fernseh-Empfängers (TV Set) eingerichtet ist, der eine Schnittstelle (IR 9) zum Empfang von Steuerbefehlen aufweist.

4. Decoder-Einrichtung (STB) mit einer Bedienungseinheit (RCU) nach einem der vorhergehenden Ansprüche, **dadurch gekennzeichnet, daß**
- das Identifikations- und/oder Schlüsselträgerbauteil (ICC BC) für die Autorisierung der Verbindung über das Telekommunikationsnetz (Tel. Netz) und das Identifikations- und/oder Schlüsselträgerbauteil (ICC BVB) zur Freigabe der Entschlüsselungseinrichtung (DVB) entweder durch zwei getrennte oder durch eine gemeinsame Chip-Karte realisiert sind.

5. Decoder-Einrichtung (STB) mit einer Bedienungseinheit (RCU) nach einem der vorhergehenden Ansprüche, **dadurch gekennzeichnet, daß**
- die Decoder-Einrichtung (STB) eine Schnittstelle (PCI) aufweist, über die die Decoder-Einrichtung (STB) mit einem Rechner (PC) verbindbar ist, der zur Steuerung der Decoder-Einrichtung (STB) und/oder zur Herstellung einer Verbindung mit einem anderen Teilnehmer über das Telekommunikationsnetz (Tel. Netz) eingerichtet ist.

6. Decoder-Einrichtung (STB) mit einer Bedienungseinheit (RCU) nach einem der vorhergehenden Ansprüche, **dadurch gekennzeichnet, daß**
- die Bedienungseinheit (RCU) durch den Rechner (PC) gebildet ist, der
- eine Schnittstelle (IR 3,6,7) aufweist, um die Decoder-Einrichtung (STB) zu steuern, und
- eine Schnittstelle (IFD 3,6) für das Identifikations- und/oder Schlüsselträgerbauteil (ICC BC) für die Autorisierung der Verbindung über das Telekommunikationsnetz (Tel. Netz) bzw. das Identifikations- und/oder Schlüsselträgerbauteil (ICC DVB) zur Freigabe des Entschlüsselungseinrichtung (DVB) aufweist.

7. Decoder-Einrichtung (STB) mit einer Bedienungseinheit (RCU) nach einem der vorhergehenden Ansprüche, **dadurch gekennzeichnet, daß**
- die Decoder-Einrichtung (STB) in das Fernsehgerät (TV) integriert ist.

8. Chip-Karte für eine Decoder-Einrichtung mit einer Bedienungseinheit (RCU) nach einem der vorhergehenden Ansprüche, mit
- einer Rechnereinheit,
- einem ersten Speicherbereich, in dem zumindest Teile von Betriebssystem-Funktionen abgelegt sind, mit denen die Kommunikation zwischen der Rechnereinheit der Chip-Karte und den Peripherie-Geräten der Chip-Karte, sowie die Kommunikation mit einem externen Host-Rechner gesteuert wird, und mit denen geschützte, ungeschützte, und/oder Schreib/Lese-Speicher-Bereiche der Chip-Karte verwaltet werden, und
- einem zweiten Speicherbereich, der in geschützte und ungeschützte Bereiche unterteilt ist, wobei der Zugriff auf geschützte Bereiche in Abhängigkeit von einem Ergebnis einer Überprüfung der Zulässigkeit des Zugriffs erfolgt,
**dadurch gekennzeichnet, daß**
- in dem geschützten Bereich des zweiten Speicherbereiches ein Generalschlüssel abgelegt ist, unter dessen Kontrolle die Eintragung wenigstens eines weiteren einfachen Schlüssels sowie eines zu diesem weiteren einfachen Schlüssel gehörendes Protokoll-Programm durch den externen Host-Rechner erfolgt.

9. Chip-Karte nach Anspruch 8, **dadurch gekennzeichnet, daß**
- in dem zweiten Speicherbereich eine Schlüssel-Verwaltung abgelegt ist, von der aus der Zugriff auf ein Protokoll-Programm eines einfachen Schlüssels erfolgt.

10. Verfahren zur Kommunikation eines Host-Rechners eines Pay-TV-Anbieters mit einer Decoder-Einrichtung mit einer Bedienungseinheit (RCU) nach einem der Ansprüche 1 - 7, und einer Chip-Karte nach Anspruch 8 oder 9 **gekennzeichnet durch** folgende Schritte:
- Herstellen einer Telekommunikationsverbindung zwischen dem Host-Rechner und der Decoder-Einrichtung mit der Bedienungseinheit oder dem die Bedienungseinheit enthaltenden Rechner **durch** den Host-Rechner,
- Überprüfen des Generalschlüssels in der Chip-Karte **durch** den Host-Rechner,
- Übermitteln eines einfachen Schlüssels sowie eines zu diesem Schlüssel gehörenden Protokoll-Programmes an die Chip-Karte in verschlüsselter Form, falls die Überprüfung positiv ausfällt,
- Eintragen des einfachen Schlüssels sowie des zu diesem Schlüssel gehörenden Protokoll-Programmes in den geschützten Speicherbereich der Chip-Karte,
- Sperren des geschützten Speicherbereiches der Chip-Karte.

11. Verfahren nach Anspruch 10, **dadurch gekennzeichnet, daß**
- vor dem Eintragen des einfachen Schlüssels sowie des zu diesem Schlüssel gehörenden Protokoll-Programmes in den geschützten Speicherbereich der Chip-Karte der Schlüssel und das Protokoll-Programm vorzugsweise durch die Rechnereinheit der Chip-karte entschlüsselt werden.

12. Verfahren nach Anspruch 10, **dadurch gekennzeichnet, daß** ein Teil des Datenübertragungsverkehrs über die Schnittstelle (5) zum Telefon-Netz und ein weiterer Teil über eine Leitung (1), die zum Übertragen des verschlüsselten Fernseh-Programms mit dem Fernsehgerät (TV) verbunden ist, mit oder vor einem das verschlüsselte Fernseh-Programm wiedergebenden Nutzsignal hin-bzw. herübertragen wird, wobei die zu übertragende Information so unterteilt und übertragen wird, daß sie nur wechselweise und auch nur stufenweise in jeweiliger Kenntnis entschlüsselt werden kann.

## Claims

1. Decoder apparatus (STB) with an operator control unit (RCU), for the decryption of encrypted television programs, with
- an input (4) for feeding in an encrypted television program,
- a decryption apparatus (DVB), which decrypts an encrypted television program into a format which can be reproduced by means of a television set (TV),
- an output (2) which can be connected to a television set (TV) in order to feed the decrypted television program into the television set (TV) for reproduction,
- an interface (IFD 3,6) for an identification and/or key carrier component (ICC DVB) for enabling of the decryption apparatus (DVB),
- an interface (IR 3,6) for an operator control unit (RCU) of the decoder apparatus (STB), and
- an interface (BC 5) to a telecommunications network (Tel. Netz),
**characterized in that**
- the interface (IFD 3,6) for the identification and/or key carrier component (ICC DVB) is disposed in the operator control unit (RCU) of the decoder apparatus (STB), and
- there is an interface (IFD 3,6) to an identification and/or key carrier component (ICC BC), the establishing of a connection via the telecommunications network (Tel. Netz) to a defined subscriber being dependent on authorization by the identification and/or key carrier component (ICC BC).

2. Decoder apparatus with an operator control unit (RCU) according to claim 1,
**characterized in that**
- the interface (IFD 3,6) to the identification and/or key carrier component (ICC BC) for the authorization of the connection via the telecommunications network (Tel. Netz) is disposed in the operator control unit (RCU).

3. Decoder apparatus (STB) with an operator control unit (RCU) according to claim 1 or 2, **characterized in that**
- the operator control unit (RCU) is also set up for operation of the television receiver (TV Set), the television receiver (TV Set) comprising an interface (IR 9) for receiving control commands.

4. Decoder apparatus (STB) with an operator control unit (RCU) according to any one of the preceding claims, **characterized in that**
- the identification and/or key carrier component (ICC BC) for the authorization of the connection via the telecommunications network (Tel. Netz) and the identification and/or key carrier component (ICC BVB) for enabling of the decryption apparatus (DVB) are realized either by two separate or by one common chipcard.

5. Decoder apparatus (STB) with an operator control unit (RCU) according to any one of the preceding claims, **characterized in that**
- the decoder apparatus (STB) comprises an interface (PCI) via which the decoder apparatus (STB) can be connected to a computer (PC), said computer (PC) being set up to control the decoder apparatus (STB) and/or to establish a connection to another subscriber via the telecommunications network (Tel. Netz).

6. Decoder apparatus (STB) with an operator control unit (RCU) according to any one of the preceding claims, **characterized in that**
- the operator control unit (RCU) is formed by the computer (PC), which computer (PC)
- comprises an interface (IR 3,6,7) in order to control the decoder apparatus (STB), and
- an interface (IFD 3,6) for the identification and/or key carrier component (ICC BC) for the authorization of the connection via the telecommunications network (Tel. Netz) or the identification and/or key carrier component (ICC DVB) for enabling of the decryption apparatus (DVB).

7. Decoder apparatus (STB) with an operator control unit (RCU) according to any one of the preceding claims, **characterized in that**
- the decoder apparatus (STB) is integrated in the television set (TV).

8. Chipcard for a decoder apparatus with an operator control unit (RCU) according to any one of the preceding claims, with
- a computer unit,
- a first storage area which stores at least parts of operating-system functions with which the communication between the computer unit of the chipcard and the peripheral devices of the chipcard as well as the communication with an external host computer is controlled and with which protected, unprotected and/or read/write storage areas of the chipcard are administered, and
- a second storage area which is divided into protected and unprotected areas, access to protected areas being dependent on a result of a check of permissibility of access, **characterized in that**
- stored in the protected area of the second storage area is a master key under the control of which at least one further simple key as well as a protocol program belonging to said further simple key are entered by the extemal host computer.

9. Chipcard according to claim 8, **characterized in that**
- stored in the second storage area is a key administrator from which a protocol program of a simple key is accessed.

10. Process for the communication of a host computer of a pay-TV provider with a decoder apparatus with an operator control unit (RCU) according to any one of claims 1 - 7 and with a chipcard according to claim 8 or 9, **characterized by** the following steps:
- establishing by the host computer of a telecommunications connection between the host computer and the decoder apparatus with the operator control unit or with the computer containing the operator control unit,
- checking of the master key in the chipcard by the host computer,
- sending of a simple key and of a protocol program belonging to said key to the chipcard in encrypted form if the result of the check is positive,
- entering of the simple key and of the protocol program belonging to said key in the protected storage area of the chipcard,
- blocking of the protected storage area of the chipcard.

11. Process according to claim 10, **characterized in that**
- prior to the entering of the simple key and of the protocol program belonging to said key in the protected storage area of the chipcard, the key and the protocol program are decrypted preferably by the computer unit of the chipcard.

12. Process according to claim 10, **characterized in that**
one part of the data transmission traffic is transmitted backwards and forwards, with or before a data signal reproducing the encrypted television program, via the interface (5) to the telephone network and a further part via a line (1) which is connected to the television set (TV) for transmission of the encrypted television program, wherein the information to be transmitted is divided up and transmitted in such a manner that it can be decrypted only alternately and also only in steps in respective knowledge.

## Revendications

1. Décodeur (STB) avec unité de commande (RCU) pour le décodage de programmes de télévision cryptés avec
- une entrée (4) pour la réception d'un programme de télévision crypté,
- un dispositif de décodage (DBV), qui décode un programme de télévision crypté en un format reproductible au moyen d'un téléviseur (TV),
- une sortie (2) pouvant être reliée à un téléviseur (TV), afin de transmettre le programme de télévision décodé au téléviseur (TV) pour visualisation,
- une interface (IFD 3,6) pour un module d'identification et/ou un module d'insertion de clé (ICC DVB) pour donner accès au dispositif de décodage (DVB),
- une interface (IR 3,6) pour une unité de commande (RCU) du décodeur (STB) et
- une interface (BC 5) avec un réseau de télécommunications,
**caractérisé en ce que**
- l'interface (IFD 3,6) pour le module d'identification et/ou le module d'insertion de clé (ICC DVB) se trouve dans l'unité de commande (RCU) du décodeur (STB) et
- il existe une interface (IFD 3,6) avec un module d'identification et/ou un module d'insertion de clé (ICC BC), l'établissement d'une liaison avec un abonné déterminé par le réseau de télécommunications ne pouvant avoir lieu que s'il y a autorisation par le module d'identification et/ou le module d'insertion de clé (ICC BC).

2. Décodeur (STB) avec unité de commande (RCU) selon la revendication 1, **caractérisé en ce que**
- l'interface (IFD 3,6) avec le module d'identification et/ou le module d'insertion de clé (ICC BC) pour l'autorisation de la liaison par le réseau de télécommunications se trouve dans l'unité de commande (RCU).

3. Décodeur (STB) avec unité de commande (RCU) selon les revendications 1 ou 2, **caractérisé en ce que**
- l'unité de commande (RCU) est également conçue pour la commande du récepteur de télévision (TV Set), qui possède une interface (IR 9) pour la réception de commandes

4. Décodeur (STB) avec unité de commande (RCU) selon l'une des revendications précédentes, **caractérisé en ce que**
- le module d'identification et/ou le module d'insertion de clé (ICC-BC) pour l'autorisation de la liaison par le réseau de télécommunications et le module d'identification et/ou le module d'insertion de clé (ICC-DVB) donnant accès au dispositif de décodage (DVB) sont réalisés soit au moyen de deux cartes à puce séparées, soit au moyen d'une carte à puce commune.

5. Décodeur (STB) avec unité de commande (RCU) selon l'une des revendications précédentes, **caractérisé en ce que**
- le décodeur (STB) possède une interface (PCI) par laquelle le décodeur (STB) peut être relié à un ordinateur (PC) conçu pour la commande du décodeur (STB) et/ou l'établissement d'une liaison avec un autre abonné par le réseau de télécommunications.

6. Décodeur (STB) avec unité de commande (RCU) selon l'une des revendications précédentes, **caractérisé en ce que**
- l'unité de commande (RCU) est constituée par l'ordinateur (PC), lequel
- possède une interface (IR 3,6,7) pour commander le décodeur (STB) et
- possède une interface (IFD 3,6) avec le module d'identification et/ou le module d'insertion de clé (ICC BC) pour l'autorisation de la liaison par le réseau de télécommunications ou avec le module d'identification et/ou le module d'insertion de clé (ICC-DVB) donnant accès au dispositif de décodage (DVB).

7. Décodeur (STB) avec unité de commande (RCU) selon l'une des revendications précédentes, **caractérisé en ce que**
- le décodeur (STB) est intégré dans le téléviseur (TV).

8. Carte à puce pour un décodeur avec unité de commande (RCU) selon l'une des revendications précédentes, avec
- un microprocesseur
- une première mémoire, qui contient au moins en partie des fonctions de système d'exploitation permettant de commander la communication entre le microprocesseur de la carte à puce et les appareils périphériques de la carte à puce ainsi que la communication avec un ordinateur-hôte externe et de gérer des espaces protégés ou non protégés et/ou des mémoires d'écriture/de lecture de la carte à puce, et
- une deuxième mémoire, divisée en espaces protégés et non protégés, l'accès aux espaces protégés n'étant possible qu'après contrôle de l'autorisation d'accès,
**caractérisée en ce que**
- l'espace protégé de la deuxième mémoire contient une clé universelle sous le contrôle de laquelle a lieu l'insertion par l'ordinateur-hôte externe d'au moins une autre clé simple ainsi que d'un programme de protocole correspondant à cette autre clé simple

9. Carte à puce selon la revendication 8, **caractérisée en ce que**
- la deuxième mémoire comporte une gestion de clé, à partir de laquelle a lieu l'accès à un programme de protocole d'une clé simple.

10. Procédé de communication entre un ordinateur hôte d'une chaîne de télévision à péage et un décodeur avec unité de commande (RCU) selon l'une des revendications 1 - 7 et avec carte à puce selon la revendication 8 ou 9, **caractérisé par** les actions suivantes :
- établissement par l'ordinateur hôte d'une liaison de télécommunications entre l'ordinateur hôte et le décodeur avec unité de commande ou avec ordinateur contenant l'unité de commande,
- authentification par l'ordinateur hôte de la clé universelle dans la carte à puce,
- transmission à la carte à puce, sous forme codée, d'une clé simple ainsi que d'un programme de protocole correspondant à cette clé, si l'authentification a été positive,
- insertion, dans l'espace protégé de la carte à puce, de la clé simple ainsi que d'un programme de protocole correspondant à cette clé,
- blocage de l'espace protégé de la carte à puce.

11. Procédé selon la revendication 10, **caractérisé en ce que**
- avant l'insertion de la clé simple et du programme de protocole correspondant à cette clé dans l'espace de mémoire protégé, la clé et le programme de protocole sont décodés en priorité par le microprocesseur de la carte à puce.

12. Procédé selon la revendication 10, **caractérisé en ce que**
- une partie du trafic de transmission de données est acheminée par l'interface (5) vers le réseau téléphonique et une autre partie par une ligne (1) qui est reliée au téléviseur (TV) pour la transmission du programme de télévision crypté, et ce avant ou en même temps qu'un signal utile reproduisant le programme de télévision crypté, l'information à transmettre étant subdivisée et transmise de telle façon qu'elle ne puisse être décodée qu'en alternance et en étapes successives, de sorte qu'il en soit pris connaissance des deux côtés.
